# EUROPÄISCHE PATENTSCHRIFT

(11) **EP 3 095 999 B1**
(45) Veröffentlichungstag und Bekanntmachung des Hinweises auf die Patenterteilung: **24.11.2021**
(21) Anmeldenummer: 16167915.4
(22) Anmeldetag: 02.05.2016
(51) Int. Cl.: F02N 7/08, F02N 7/00, F02N 11/08

(54) **HYDROSTATISCHES ANTRIEBSSYSTEM**
HYDROSTATIC DRIVE SYSTEM
SYSTEME D'ENTRAINEMENT HYDROSTATIQUE

(30) Priorität: 19.05.2015 DE 102015107857
(43) Veröffentlichungstag der Anmeldung: 23.11.2016
(73) Patentinhaber: Linde Hydraulics GmbH & Co. KG, 63743 Aschaffenburg (DE)
(72) Erfinder: Dölger, Marcus, 63808 Haibach (DE); Krittian, Lukas, 63739 Aschaffenburg (DE)
(74) Vertreter: Patentship Patentanwaltsgesellschaft mbH

(56) Entgegenhaltungen:
- DE-A1- 4 320 655
- DE-A1-102011 104 919
- DE-A1-102012 108 857
- JP-A- 2013 091 953
- SU-A1- 1 263 899
- US-A- 4 845 947

## Beschreibung

Die Erfindung betrifft ein hydrostatisches Antriebssystem einer mobilen Arbeitsmaschine mit einer Arbeitshydraulik und einer von einem Verbrennungsmotor angetriebenen Arbeitshydraulikpumpe, die in einem Pumpenbetrieb mit einer Saugseite Druckmittel aus einem Behälter ansaugt und mit einer Förderseite in eine zu der Arbeitshydraulik geführte Förderleitung fördert, wobei eine hydraulische Start-Stopp-Funktion zum Starten des abgestellten Verbrennungsmotors vorgesehen ist, in der die Arbeitshydraulikpumpe in einem Motorbetrieb betreibbar ist, wobei im Motorbetrieb die Arbeitshydraulikpumpe von Druckmittel angetrieben ist, das von einem Druckmittelspeicher an die Saugseite der Arbeitshydraulikpumpe zugeführt wird, wobei ein Bypassventil vorgesehen ist, mit dem im Motorbetrieb der Arbeitshydraulikpumpe zum Starten des abgestellten Verbrennungsmotors der von der im Motorbetrieb betriebenen Arbeitshydraulikpumpe an der Förderseite gelieferte Volumenstrom zu dem Behälter abführbar ist, wobei das Bypassventil im Motorbetrieb zum Starten des abgestellten Verbrennungsmotors in eine die Förderseite der Arbeitshydraulikpumpe mit dem Behälter verbindende Öffnungsstellung beaufschlagt ist.

Derartige hydrostatische Antriebssysteme werden in mobilen Arbeitsmaschinen, beispielsweise Baumaschinen, Flurförderzeugen, Landmaschinen, Forstmaschinen, Baggern, Rad- und Teleskopladern, Schleppern, Mähdreschern, Feldhäcksler, Zuckerrüben- oder Kartoffelroder, eingesetzt.

Um den Kraftstoffverbrauch bei im Leerlauf laufenden Verbrennungsmotor, beispielsweise während Wartezeiten, Arbeitspausen oder Arbeitsunterbrechungen, in denen eine Arbeitsfunktion der Arbeitshydraulik und/oder eine Fahrfunktion eines Fahrantriebs nicht angefordert ist, zu verringern, ist eine Start-Stopp-Funktion für den Verbrennungsmotor vorgesehen, bei der der unbelastete Verbrennungsmotor in Wartezeiten, Arbeitspausen oder bei Arbeitsunterbrechungen abgeschaltet und somit abgestellt wird und bei einer Drehmomentanforderung durch eine Arbeitsfunktion und/oder durch den Fahrantrieb automatisch wieder gestartet wird. Mit einer hydraulischen Start-Stopp-Funktion des Verbrennungsmotors, die einen hydraulischen Starter zum Starten des abgestellten Verbrennungsmotors aufweist, kann eine Start-Stopp-Funktion in robuster und zuverlässiger Weise erzielt werden.

Um den Bauaufwand für einen separaten hydraulischen Starter der Start-Stopp-Funktion des abgestellten Verbrennungsmotors zu vermeiden, ist es bereits bekannt, die bereits vorhandene Arbeitshydraulikpumpe auch als Motor zu betrieben, die im Motorbetrieb den hydraulischen Starter der Start-Stopp-Funktion zum Starten des abgestellten Verbrennungsmotors bildet. Im Pumpenbetrieb ist die Arbeitshydraulikpumpe von dem laufenden Verbrennungsmotor angetrieben und saugt mit einer Saugseite Druckmittel aus einem Behälter an. Im Pumpenbetrieb fördert die Arbeitshydraulikpumpe an der Förderseite Druckmittel zur Versorgung der Verbraucher der Arbeitshydraulik. Im Motorbetrieb wird der Arbeitshydraulikpumpe an der Saugseite unter Druck stehendes Druckmittel aus einem zuvor mit Druckmittel geladenen Druckmittelspeicher zugeführt und die Arbeitshydraulikpumpe von dem aus dem Druckmittelspeicher zugeführten Druckmittel angetrieben. Von der im Motorbetrieb betriebenen Arbeitshydraulikpumpe wird hierdurch ein zusätzliches Drehmoment an der Kurbelwelle des Verbrennungsmotors erzeugt, das zum Starten des abgestellten Verbrennungsmotors dient.

Die DE 43 20 655 A1 offenbart eine hydrostatisches Antriebssystem, bei dem eine hydraulische Pumpe, die einen Nebenanrieb antreibt, den Verbrennungsmotor starten kann, in dem diese von Druckmittel an der Saugseite aus einem Speicher beaufschlagt wird. An der Förderseite der Pumpe kann das aus dem Speicher zugeführte Druckmittel über ein Ventil abströmen, das im Normalbetrieb des Fahrzeugs entsprechend des Energiebedarfs des Nebenantriebs geregelt wird, der von der Pumpe mit Druckmittel versorgt wird.

Aus der DE 10 2011 104 919 A1 ist ein hydrostatisches Antriebssystem bekannt, bei dem zwei zusätzliche Hydromaschinen als hydraulischer Starter des Verbrennungsmotor vorgesehen sind. Ventile steuern die Verbindung der Eingangsseiten der beiden Hydromaschinen mit dem Druckmittelspeicher für deren Motorbetrieb. Das am Ausgang der Hydromaschinen abströmende Druckmittel strömt über eine Leitung in den Behälter.

Die JP 2013-91953 A offenbart ein hydrostatisches Antriebssystem, bei dem die Arbeitshydraulikpumpe den Verbrennnungsmotor starten kann, in dem die Arbeitshydraulikpumpe mit Druckmittel an der Saugseite aus einem Speicher angetrieben wird. Zur Steuerung des Motorbetriebs der Arbeitshydraulikpumpe ist ein Ventil vorgesehen, das zum Start des Verbrennungsmotors in eine Schaltstellung betätigt wird, in der die Saugseite der Arbeitshydraulikpumpe mit dem Speicher verbunden und die Förderseite der Arbeitshydraulikpumpe mit dem Behälter verbunden ist.

Die DE 10 2012 108 857 A1 offenbart ein hydrostatisches Antriebssystem mit einem zusätzlichen hydraulischen Triebwerk, das als hydraulischer Starter des Verbrennungsmotor ausgebildet ist. Mit einem Ventil, das an die Ausgangsseite des Triebwerks angeschlossen ist, kann beim Startvorgang die Ausgangsseite des Triebwerks mit dem Behälter verbunden werden und bei laufendem Verbrennungsmotor mit dem Triebwerk der Speicher geladen werden.

Die SU 1263899 A1 offenbart einen hydraulischen Starter eines Verbrennungsmotors durch den Motorbetrieb einer Hydraulikpumpe. Ein Ventil steuert den Motorbetrieb der Hydraulikpumpe. Für den Startvorgang des Verbrennungsmotors wird der Sauganschluss der Hydraulikpumpe mit dem Speicher verbunden und der Förderanschluss der Pumpe mit dem Behälter verbunden.

Ein hydrostatisches Antriebssystem, bei dem die Arbeitshydraulikpumpe im Motorbetrieb an der Saugseite von Druckmittel aus einem Druckmittelspeicher angetrieben ist, um einen abgestellten Verbrennungsmotor zu starten, ist aus der DE 10 2013 110 239 A1 bekannt.

Während des Startvorgangs des Verbrennungsmotors ist es erforderlich, den Druckmittelstrom, der der im Motorbetrieb betriebenen Arbeitshydraulikpumpe an der Saugseite aus dem Druckmittelspeicher zugeführt wird, auf der Förderseite der Arbeitshydraulikpumpe in einen Behälter abzuführen. Hierzu kann ein Tankentlastungspfad der Arbeitshydraulik verwendet werden, der von einer Umlaufdruckwaage der Arbeitshydraulik gebildet wird. Die Umlaufdruckwaage ist von einer Feder und dem höchsten Lastdruck der Verbraucher der Arbeitshydraulik in Richtung einer Sperrstellung beaufschlagt und von dem in einer Förderleitung der Arbeitshydraulik anstehenden Druck der Arbeitshydraulikpumpe in eine Durchflussstellung beaufschlagt, in der der Tankentlastungspfad geöffnet wird und die Förderleitung der Arbeitshydraulik mit einem Behälter verbunden wird.

Da sich bei abgestelltem Verbrennungsmotor die Umlaufdruckwaage in der Sperrstellung befindet, muss diese zu Beginn des Startvorgangs des abgestellten Verbrennungsmotors von dem an der Förderseite der im Motorbetrieb betriebenen Arbeitshydraulikpumpe ausströmenden Druckmittelstrom entgegen der Kraft der Feder in die Durchflussstellung betätigt und bewegt werden, um den Tankentlastungspfad zu öffnen. Der zum Öffnen der Umlaufdruckwaage erforderliche Druckaufbau an der Förderseite der im Motorbetrieb betriebenen Arbeitshydraulikpumpe mindert jedoch die Druckdifferenz zwischen der Saugseite und der Förderseite der im Motorbetrieb betriebenen Arbeitshydraulikpumpe, so dass das im Motorbetrieb der Arbeitshydraulikpumpe abgebbare Drehmoment, das von dem im Druckmittelspeicher anstehenden Druck abhängt, zum Starten des Verbrennungsmotors reduziert wird. Dieses Drehmoment wird noch weiter reduziert, wenn zu Beginn des Startvorgangs von dem an der Förderseite der im Motorbetrieb betriebenen Arbeitshydraulikpumpe ausströmenden Druckmittelstrom noch weitere stromauf der Umlaufdruckwaage angeordnete Ventile, die sich bei abgestelltem Verbrennungsmotor in einer die Förderleitung der Arbeitshydraulik absperrenden Sperrstellung befinden, geöffnet werden müssen, beispielsweise ein Prioritätsventil zur bevorzugten Versorgung eines Verbrauchers und/oder ein Ladeventil zum Laden des Druckmittelspeichers bzw. ein Retarderventil, mit dem im Bremsbetrieb der Arbeitsmaschine die Förderleitung der Arbeitshydraulik androsselbar ist.

Der vorliegenden Erfindung liegt die Aufgabe zugrunde, ein Antriebssystem der eingangs genannten Gattung zur Verfügung zu stellen, mit dem bei geringem zusätzlichen Bauaufwand das Drehmoment zum Starten des abgestellten Verbrennungsmotors durch den Motorbetrieb der Arbeitshydraulikpumpe erhöht werden kann.

Diese Aufgabe wird erfindungsgemäß dadurch gelöst, dass der zu der Arbeitshydraulik geführten Förderleitung eine Umlaufdruckwaage zugeordnet ist, wobei das Bypassventil der Förderleitung stromauf der Umlaufdruckwaage zugeordnet ist.. Erfindungsgemäß ist somit ein Bypassventil vorgesehen, mit dem im Motorbetrieb der Arbeitshydraulikpumpe während des Startvorgangs des abgestellten Verbrennungsmotors die Förderseite der Arbeitshydraulikpumpe direkt mit dem Behälter verbunden wird, so dass der an der Förderseite gelieferte Volumenstrom direkt zu dem Behälter abgeführt wird. Bei dem erfindungsgemäßen Antriebssystem wird somit der im Motorbetrieb der Arbeitshydraulikpumpe während des Startvorgangs des abgestellten Verbrennungsmotors der an der Förderseite gelieferte Volumenstrom nicht über den Tankentlastungspfad der Arbeitshydraulik zu dem Behälter abgeführt, sondern über das geöffnete Bypassventil direkt zu dem Behälter abgeführt, so dass der Tankentlastungspfades der Arbeitshydraulik und die im Tankentlastungspfad angeordneten Ventile umgangen werden. Bei dem erfindungsgemäßen Antriebssystem, bei dem während des Startvorgangs des Verbrennungsmotors der Tankentlastungspfad der Arbeitshydraulik umgangen wird und der von der im Motorbetrieb betriebenen Arbeitshydraulikpumpe an der Förderseite geförderte Druckmittelstrom über das Bypassventil zum Behälter abgeführt wird, ist es somit nicht erforderlich, die in dem Tankentlastungspfad der Arbeitshydraulik angeordneten Ventile zu öffnen. Durch die direkte Verbindung der Förderseite der Arbeitshydraulikpumpe mit dem Behälter über das Bypassventil während des Startvorgang des abgestellten Verbrennungsmotors kann somit der dem Drehmomentaufbau an der Förderseite der im Motorbetrieb betriebenen Arbeitshydraulikpumpe entgegenstehende Druck verringert werden, so dass ein erhöhtes Drehmoment von der im Motorbetrieb betriebene Arbeitshydraulikpumpe zum Starten des Verbrennungsmotors bereitgestellt wird. Das erhöhte Drehmoment, das von der im Motorbetrieb betriebenen Arbeitshydraulikpumpe des erfindungsgemäßen Antriebssystems abgegeben wird, ermöglicht es, dass großvolumigere Verbrennungsmotore gestartet werden können oder alternativ die Dynamik des Startvorgangs des Verbrennungsmotors gesteigert werden kann. Durch den Anschluss des Bypassventils stromauf der Umlaufdruckwaage wird eine besondere günstige Entlastung des von der Arbeitshydraulikpumpe im Motorbetrieb an der Förderseite geförderten Druckmittelstroms zu dem Behälter unter Umgehung des von der Umlaufdruckwaage gebildeten Tankentlastungspfades der Arbeitshydraulik erzielt, bei dem die Umlaufdruckwaage nicht durchströmt und geöffnet werden muss und somit der Tankentlastungspfad der Arbeitshydraulik nicht durchströmt ist, so dass geringe Druckverluste entstehen und die im Motorbetrieb betriebene Arbeitshydraulikpumpe ein hohes Drehmoment abgibt.

Gemäß einer vorteilhaften Ausgestaltungsform der Erfindung ist das Bypassventil beim Startvorgang des Verbrennungsmotors in eine die Förderseite der Arbeitshydraulikpumpe mit dem Behälter absperrende Sperrstellung beaufschlagt, bevor die Leerlaufdrehzahl des Verbrennungsmotors erreicht wird. Das Bypassventil befindet sich somit zu Beginn des Startvorgangs des Verbrennungsmotors in der Öffnungsstellung, um im Motobetrieb der Arbeitshydraulikpumpe ein hohes Drehmoment bereitzustellen. Wird das Bypassventil in eine Sperrstellung betätigt, übernimmt der Tankentlastungspfad der Arbeitshydraulik den an der Förderseite der im Motorbetrieb betriebenen Arbeitshydraulikpumpe gelieferten Druckmittelstrom und führt diesen zu dem Behälter ab. Sofern das Bypassventil beim Startvorgang des Verbrennungsmotors in eine die Förderseite der Arbeitshydraulikpumpe mit dem Behälter absperrende Sperrstellung beaufschlagt wird, bevor die Leerlaufdrehzahl des Verbrennungsmotors erreicht wird, wird erzielt, dass mit Erreichen der Leerlaufdrehzahl und dem Wiederstart des Verbrennungsmotors die Arbeitshydraulikpumpe im Pumpenbetrieb betrieben werden kann, um die angeschlossenen Verbraucher mit Druckmittel zu versorgen, das an der Förderseite der Arbeitshydraulikpumpe geliefert wird. Zudem werden hierdurch Verluste verhindert, da nach dem Wiederstart des Verbrennungsmotors und dessen Betrieb auf der Leerlaufdrehzahl das Bypassventil in die Sperrstellung beaufschlagt ist, so dass die Arbeitshydraulikpumpe im Pumpenbetrieb nicht über das geöffnete Bypassventil verlustbehaftet in den Behälter fördert.

Gemäß einer vorteilhaften Ausführungsform der Erfindung ist in der Förderleitung der Arbeitshydraulikpumpe ein Prioritätsventil zur bevorzugten Versorgung eines Verbrauchers, insbesondere einer Lenkungshydraulik, angeordnet, das eingangsseitig mittels einer Verbindungsleitung mit der Förderseite der Arbeitshydraulikpumpe und ausgangsseitig mit der zu der Arbeitshydraulik geführten Förderleitung und einer zu dem bevorzugten Verbraucher geführten Förderleitung verbunden ist, wobei das Bypassventil der Verbindungsleitung zugeordnet ist. Durch den Anschluss des Bypassventils stromauf des Prioritätsventils wird eine besondere günstige Entlastung des von der Arbeitshydraulikpumpe im Motorbetrieb an der Förderseite geförderten Druckmittelstroms zu dem Behälter ermöglicht, bei dem das Prioritätsventil nicht durchströmt und geöffnet werden muss, so dass geringe Druckverluste entstehen und die im Motorbetrieb betriebene Arbeitshydraulikpumpe ein hohes Drehmoment abgibt. Gemäß einer alternativen und vorteilhaften Ausführungsform der Erfindung ist in der Förderleitung der Arbeitshydraulikpumpe ein Prioritätsventil zur bevorzugten Versorgung eines Verbrauchers, insbesondere einer Lenkungshydraulik, angeordnet, das eingangsseitig mittels einer Verbindungsleitung mit der Förderseite der Arbeitshydraulikpumpe und ausgangsseitig mit der zu der Arbeitshydraulik geführten Förderleitung und einer zu dem bevorzugten Verbraucher geführten Förderleitung verbunden ist, wobei das Bypassventil der zu der Arbeitshydraulik geführten Förderleitung zugeordnet ist. Durch den Anschluss des Bypassventils stromab des Prioritätsventils ergeben sich Vorteile, da bereits während des Startvorgangs des abgestellten Verbrennungsmotors ein Betrieb des bevorzugten Verbrauchers ermöglicht wird. Zudem wird bei dieser Anordnung des Bypassventils die Sicherheit gesteigert, da die Prioritätsfunktion (bevorzugte Versorgung eines Verbrauchers, beispielsweise einer Lenkungshydraulik) von einem Ausfall des Bypassventils nicht beeinträchtigt wird.

Sofern in der zu der Arbeitshydraulik geführten Förderleitung ein Ladeventil zum Laden des Druckmittelspeichers angeordnet ist, ergeben sich besondere Vorteile, wenn das Bypassventil der Förderleitung stromauf des Ladeventils zugeordnet ist. Durch den Anschluss des Bypassventils stromauf des Ladeventils wird eine besondere günstige Entlastung des von der Arbeitshydraulikpumpe im Motorbetrieb an der Förderseite geförderten Druckmittelstroms zu dem Behälter ermöglicht, bei dem das Ladeventil nicht durchströmt und geöffnet werden muss, so dass geringe Druckverluste entstehen und die im Motorbetrieb betriebene Arbeitshydraulikpumpe ein hohes Drehmoment abgibt.

Das Bypassventil kann gemäß einer vorteilhaften Ausgestaltungsform der Erfindung als Schaltventil ausgebildet sein.

Ein geringer Bauaufwand ist hierbei erzielbar, wenn das Schaltventil elektrisch betätigbar ist und zur Ansteuerung mit einer elektronischen Steuereinrichtung in Wirkverbindung steht. Mit einer elektronischen Steuereinrichtung kann das Schaltventil auf einfache Weise zu Beginn des Startvorgangs des abgestellten Verbrennungsmotors in eine Öffnungsstellung betätigt werden, um den von der im Motorbetrieb betriebenen Arbeitshydraulikpumpe an der Förderseite gelieferten Druckmittelstrom bei geringem Gegendruck zu dem Behälter abzuführen.

Gemäß einer vorteilhaften Ausführungsform der Erfindung ist das Bypassventil als ein in Durchflussrichtung zu dem Behälter schließendes Rückschlagventil ausgebildet, das von einer Feder in eine die Förderseite der Arbeitshydraulikpumpe mit dem Behälter verbindende Öffnungsstellung beaufschlagt ist. Hierdurch ergibt sich besonders einfacher, kostengünstiger und robuster Aufbau des Bypassventils.

Das Rückschlagventil weist vorteilhafterweise einen Ventilkörper auf, der von der dem Rückschlagventil zuströmenden Druckmittelmenge in Richtung einer die Förderseite der Arbeitshydraulikpumpe mit dem Behälter absperrenden Sperrstellung beaufschlagt ist. Das als Rückschlagventil ausgebildete Bypassventil arbeitet somit nach dem Düse-Prallplatten-Prinzip. Das Rückschlagventil wird mittels der eingestellten und vorgegebenen Federkraft der Feder für eine vorbestimmte Druckmittelmenge in der offenen Durchflussstellung gehalten. Übersteigt die von der Arbeitshydraulikpumpe an der Förderseite gelieferte Druckmittelmenge diesen von der Feder eingestellten Schwellwert, wird der Ventilkörper des Rückschlagventils von der geförderten Druckmittelmenge in die Sperrstellung betätigt. Das Rückschlagventil ist somit hydraulisch gesteuert, wodurch sich eine einfache und automatische Steuerung des Bypassventils in die Sperrstellung erzielen lässt.

Besondere Vorteile ergeben sich, wenn gemäß einer bevorzugten Ausführungsform der Erfindung das Rückschlagventil derart ausgelegt ist, dass der Ventilkörper beim Startvorgang des Verbrennungsmotors in die Sperrstellung betätigt wird, bevor die von der im Motorbetrieb betriebenen Arbeitshydraulikpumpe an der Förderseite gelieferte Fördermenge bei einem gegebenen Verdrängungsvolumen der Arbeitshydraulikpumpe und der Leerlaufdrehzahl des Verbrennungsmotors erreicht wird. Mit Erreichen der Leerlaufdrehzahl und dem Wiederstart des Verbrennungsmotors ist somit das Rückschlagventil in die Sperrstellung betätigt, so dass die Arbeitshydraulikpumpe im Pumpenbetrieb betrieben werden kann, um die angeschlossenen Verbraucher mit Druckmittel zu versorgen, das an der Förderseite der Arbeitshydraulikpumpe geliefert wird, und es werden Verluste verhindert, da nach dem Wiederstart des Verbrennungsmotors und dessen Betrieb auf der Leerlaufdrehzahl das Rückschlagventil in die Sperrstellung beaufschlagt ist, so dass die Arbeitshydraulikpumpe im Pumpenbetrieb nicht über das geöffnete Bypassventil verlustbehaftet in den Behälter fördert.

Die Arbeitshydraulikpumpe kann als Konstantpumpe mit einem konstanten Verdrängungsvolumen ausgebildet sein. Alternativ kann die Arbeitshydraulikpumpe als Verstellpumpe mit einem veränderbaren Verdrängungsvolumen ausgebildet sein. Das gegebene Verdrängungsvolumen entspricht hierbei dem minimalen Verdrängungsvolumen. Das Rückschlagventil wird somit in die Sperrstellung betätigt, bevor die von der im Motorbetrieb betriebenen Arbeitshydraulikpumpe an der Förderseite gelieferten Fördermenge bei minimalem Verdrängungsvolumen der Arbeitshydraulikpumpe und der Leerlaufdrehzahl des Verbrennungsmotors erreicht wird. Hierdurch wird sicher erzielt, dass nach dem Wiederstart des Verbrennungsmotors und einem Betrieb der Verstellpumpe auf minimalem Verdrängungsvolumen, beispielsweise wenn keine Verbraucher der Arbeitshydraulik betätigt sind, das Rückschlagventil in die Sperrstellung betätigt ist, so dass ein verlustbehaftetes Abströmen des von der im Pumpenbetrieb betriebenen Arbeitshydraulikpumpe gelieferten Fördermenge über das geöffnete Bypassventil verhindert wird.

Weitere Vorteile und Einzelheiten der Erfindung werden anhand der in den schematischen Figuren dargestellten Ausführungsbeispiele näher erläutert. Hierbei zeigt
- Figur 1: einen Schaltplan einer ersten Ausführungsform der Erfindung und
- Figur 2: einen Schaltplan einer zweiten Ausführungsform der Erfindung

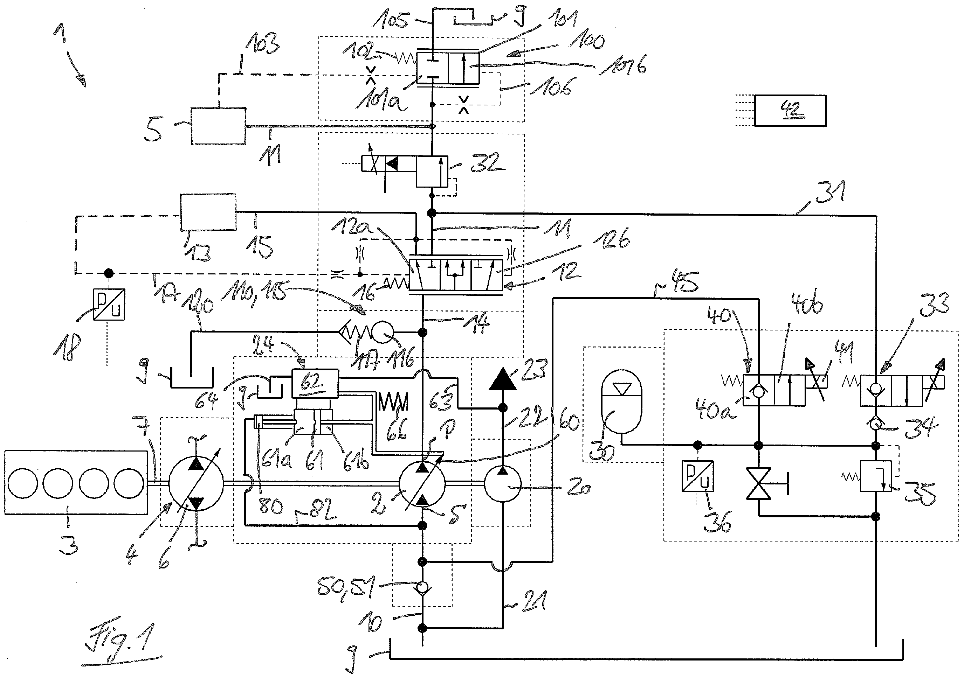

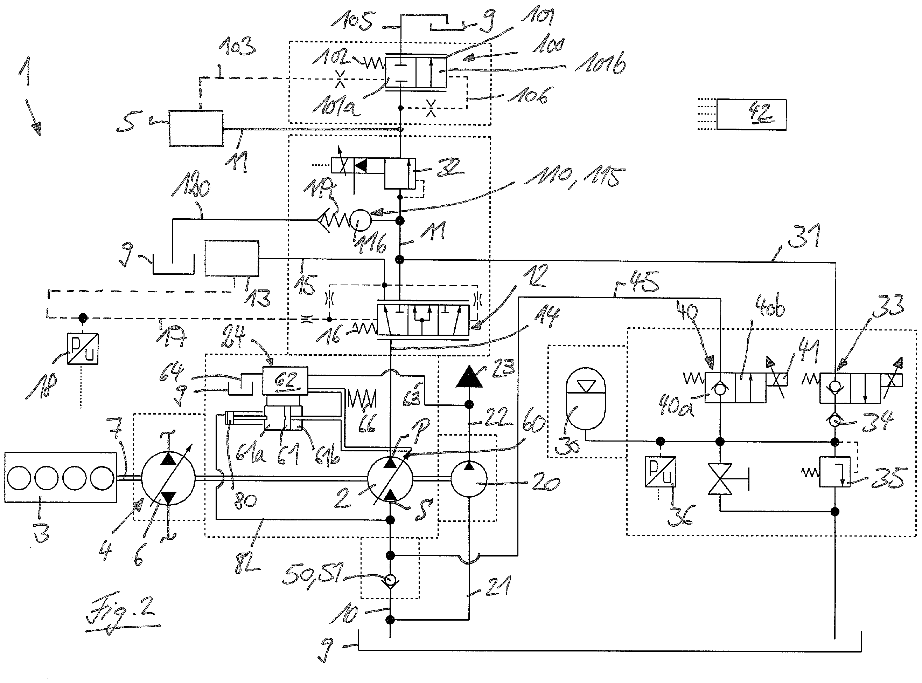

In den Figuren 1 und 2 ist jeweils ein Schaltplan eines erfindungsgemäßes hydrostatischen Antriebssystems 1 einer nicht näher dargestellten mobilen Arbeitsmaschine, beispielsweise einer als Flurförderzeug oder als Bau- bzw. Landmaschine ausgebildeten mobilen Arbeitsmaschine, dargestellt. Gleiche Bauteile sind hierbei mit gleichen Bezugsziffern versehen.

Das Antriebssystem 1 umfasst einen Verbrennungsmotor 3, beispielsweise einen Dieselmotor, und eine von dem Verbrennungsmotor 3 angetriebene und mit dem Verbrennungsmotor 3 trieblich verbundene Arbeitshydraulikpumpe 2, die eine Arbeitshydraulik 5 mit Druckmittel versorgt. Im dargestellten Ausführungsbeispiel umfasst das Antriebssystem 1 weiterhin einen von dem Verbrennungsmotor 3 angetriebenen Fahrantrieb 4 der Arbeitsmaschine.

Der Fahrantrieb 4 ist im dargestellten Ausführungsbeispiel als hydrostatischer Fahrantrieb ausgebildet, der aus einer im Fördervolumen verstellbaren Fahrpumpe 6 besteht, die zum Antrieb mit einer Abtriebswelle 7 des Verbrennungsmotors 3 in trieblicher Verbindung steht. Die Fahrpumpe 6 steht mit einem oder mehreren im Schluckvolumen festen oder verstellbaren, nicht näher dargestellten Hydromotoren, bevorzugt im geschlossenen Kreislauf, in Verbindung, die auf nicht mehr dargestellte Weise mit den angetriebenen Rädern des Fahrzeugs in Wirkverbindung stehen.

Der Fahrantrieb 4 kann alternativ als elektrischer Fahrantrieb mit einem von dem Verbrennungsmotor 3 angetriebenen elektrischen Generator und einem oder mehreren elektrischen Fahrmotoren gebildet werden. Zudem kann als Fahrantrieb ein mechanischer Fahrantrieb mit einem mechanischen Getriebe, beispielsweise einem Stufenschaltgetriebe oder einem Leistungsverzweigungsgetriebe oder einem Drehmomentwandlergetriebe, vorgesehen werden.

Die Arbeitshydraulik 5 umfasst Hydraulikfunktionen bzw. Arbeitsfunktionen der Arbeitsmaschine, beispielsweise bei einem Flurförderzeug eine Arbeitshydraulik zum Betätigen eines Lastaufnahmemittels an einem Hubmast, bzw. bei einer beispielsweise als Bagger ausgebildeten Baumaschine die Arbeitsfunktionen der von einer Schaufel ausgebildeten Arbeitsausrüstung.

Zur Versorgung der Arbeitshydraulik 5 mit Druckmittel ist die im dargestellten Ausführungsbeispiel als Verstellpumpe mit einem stufenlos verstellbaren Verdrängungsvolumen ausgebildete Arbeitshydraulikpumpe 2 vorgesehen, die bevorzugt als Axialkolbenmaschine in Schrägscheibenbauweise ausgebildet ist. Die Arbeitshydraulikpumpe 2 ist im offenen Kreislauf betrieben und steht zum Antrieb mit der Abtriebswelle 7 des Verbrennungsmotors 3 in trieblicher Verbindung.

Die Arbeitshydraulikpumpe 2 steht eingangsseitig mit der Saugseite S mittels einer Ansaugleitung 10 mit einem Behälter 9 in Verbindung. Eine ausgangsseitig mit der Förderseite P der Arbeitshydraulikpumpe 2 in Verbindung stehende Förderleitung 11 ist an eine nicht näher dargestellte Steuerventileinrichtung angeschlossen, mittels der die nicht näher dargestellten hydraulischen Verbraucher der Arbeitshydraulik 5 steuerbar sind. Die Steuerventileinrichtung umfasst bevorzugt ein oder mehrere Wegeventile zur Betätigung der Verbraucher.

Im dargestellten Ausführungsbeispiel ist weiterhin ein Prioritätsventil 12 dargestellt, mit dem die bevorzugte Versorgung eines von der Arbeitshydraulikpumpe 2 versorgten Verbrauchers 13, beispielsweise einer hydraulischen Lenkungseinrichtung des Fahrzeugs, sichergestellt werden kann. Das Prioritätsventil 12 ist eingangsseitig mittels einer Verbindungsleitung 14 mit der Förderseite P der Arbeitshydraulikpumpe 2 verbunden und steht ausgangsseitig mit der zu der Arbeitshydraulik 5 geführten Förderleitung 11 sowie einer zu der Lenkungseinrichtung 13 geführten Förderleitung 15 in Verbindung. Das Prioritätsventil 12 ist von einer Feder 16 sowie dem in einer Lastdruckleitung 17 anstehenden Lastdruck der Lenkungseinrichtung 13 in eine erste Schaltstellung 12a gesteuert, in der die Verbindungsleitung 14 mit der Förderleitung 15 verbunden ist und die Verbindung der Verbindungsleitung 14 mit der Förderleitung 11 abgesperrt ist. Das Prioritätsventil 12 ist von dem in der Förderleitung 15 anstehenden Druck in eine zweite Schaltstellung 12b gesteuert, in der die Verbindungsleitung 14 mit der Förderleitung 11 der Arbeitshydraulik 5 verbunden ist und die Verbindung der Verbindungsleitung 14 mit der Förderleitung 15 abgesperrt ist. Zur Erfassung des in der Lastdruckleitung 17 anstehenden Druckes ist ein Drucksensor 18 vorgesehen.

Das Antriebssystem 1 umfasst weiterhin eine Speisepumpe 20, die zum Antrieb mit der Abtriebswelle 7 in Verbindung steht. Die Speisepumpe 20 ist im dargestellten Ausführungsbeispiel als Konstantpumpe mit einem konstanten Verdrängervolumen ausgebildet, die im offenen Kreislauf betrieben ist. Die Speisepumpe 20 steht hierzu mit der Saugseite über eine Ansaugleitung 21 mit dem Behälter 9 in Verbindung und fördert in eine an die Förderseite angeschlossene Speisedruckleitung 22, an die die entsprechenden Verbraucher eines Speisedruckkreises 23 angeschlossen sind, beispielsweise eine Verstelleinrichtung 24 zur Verstellung des Verdrängervolumens der Arbeitshydraulikpumpe 2. Als weitere Verbraucher des Speisekreises 23 können eine Einspeisevorrichtung des hydrostatischen Fahrantriebs, eine Bremsanlage der Arbeitsmaschine und Vorsteuerventile für die Steuerventile der Arbeitshydraulik 5 vorgesehen sein.

Die Arbeitshydraulikpumpe 2 ist als Zweiquadrantentriebwerk ausgebildet, das bei gleicher Drehrichtung und gleicher Durchflussrichtung des Druckmittels als Pumpe und Motor betreibbar ist.

Im Pumpenbetrieb, wobei die Arbeitshydraulikpumpe 2 von dem laufenden Verbrennungsmotor 3 angetrieben wird, saugt die Arbeitshydraulikpumpe 2 über die Saugseite S Druckmittel aus dem Behälter 9 an und fördert das Druckmittel in die Förderseite P und somit über das Prioritätsventil 12 in die Förderleitung 11 der Arbeitshydraulik 5 bzw. die Förderleitung 15 der Lenkungseinrichtung 13.

Im Motorbetrieb der Arbeitshydraulikpumpe 2 bildet die Arbeitshydraulikpumpe 2 einen hydraulischen Starter einer hydraulischen Start-Stopp-Funktion zum Starten des abgeschalteten und abgestellten Verbrennungsmotors 3. Im Motorbetrieb wird die Arbeitshydraulikpumpe 2 an der Saugseite S mit Druckmittel aus einem Druckmittelspeicher 30 angetrieben.

Der Druckmittelspeicher 30 ist zum Laden mit Druckmittel an die Förderseite P der Arbeitshydraulikpumpe 2 angeschlossen. Im dargestellten Ausführungsbeispiel ist zum Laden des Druckmittelspeichers 30 der Druckmittelspeicher 30 an die zu der Arbeitshydraulik 4 geführte Förderleitung 11 der Arbeitshydraulikpumpe 2 mittels einer Verbindungsleitung 31 angeschlossen.

In der Förderleitung 11 der Arbeitshydraulik 5 ist ein elektrisch betätigbares Ladeventil 32 angeordnet, das bei einer Ansteuerung in eine die Förderleitung 11 drosselnde Drosselstellung zum Aufstauen eines Druckes betätigbar ist. Das Ladeventil 32 ist bevorzugt als Retarderventil ausgeführt, das im Bremsbetrieb der Arbeitsmaschine in eine Drosselstellung betätigt wird, um durch Aufstauen eines Druckes in der Förderleitung 11 ein zusätzliches, abbremsendes Drehmoment an der von der Kurbelwelle gebildeten Abtriebswelle 7 aufzuprägen, welches dem motorisch wirkenden Drehmoment an der Fahrpumpe 6 entgegenwirkt und so das Fahrzeug abbremst. In einem derartigen Bremsbetrieb bei drosselndem Retarderventil kann zudem auf einfache Weise eine Energierückgewinnung erfolgen und der Druckmittelspeicher 30 geladen werden, so dass zum Laden des Druckmittelspeichers 30 die kinetische Energie des Fahrzeugs während eines Bremsvorgangs dient. Die Verbindungsleitung 31 ist hierbei stromauf des Ladeventils 32 und somit zwischen dem Ladeventil 32 und dem Prioritätsventil 12 an die Förderleitung 11 angeschlossen.

Zum Laden des Druckmittelspeichers 30 kann alternativ die im Pumpenbetrieb arbeitende Arbeitshydraulikpumpe 2 primärseitig von dem laufenden Verbrennungsmotor 3 angetrieben werden.

In der Verbindungsleitung 31 ist eine Ladeventileinrichtung 33 angeordnet, die ein in Richtung zum Druckmittelspeicher 30 öffnendes Rückschlagventil 34 umfasst. Weiterhin ist der Verbindungsleitung 31 zwischen der Ladeventileinrichtung 33 und dem Druckmittelspeicher 30 ein Druckbegrenzungsventil 35 zur Absicherung des Druckes in dem Druckmittelspeicher 30 zugeordnet.

Dem Druckmittelspeicher 30 ist weiterhin ein Drucksensor 36 zugeordnet. Der Drucksensor 36 dient zur Überwachung des Ladedruckes und somit des Ladezustands des Druckmittelspeichers 30.

Die Verbindung des Druckmittelspeichers 30 mit der Saugseite S der Arbeitshydraulikpumpe 2 für den Motorbetrieb der Arbeitshydraulikpumpe 2 ist mittels eines elektrisch betätigbaren Steuerventils 40 steuerbar. Das Steuerventil 40 weist eine Sperrstellung 40a und eine Durchflussstellung 40b auf, wobei die Sperrstellung 40a bevorzugt leckagedicht ausgeführt ist mit einem in Richtung zur Arbeitshydraulikpumpe 2 sperrenden Sperrventil. Das Steuerventil 40 ist als elektrisch betätigbares Steuerventil, bevorzugt Schaltventil, ausgebildet, das mittels einer elektrischen Betätigungseinrichtung 41, beispielsweise einem Schaltmagnet, zwischen der Sperrstellung 40a und der Durchflussstellung 40b betätigbar ist.

Die Betätigungseinrichtung 41 steht zur Ansteuerung mit einer elektronischen Steuereinrichtung 42 in Verbindung. Die Steuereinrichtung 42 steht weiterhin mit dem Drucksensor 36 und/oder dem Drucksensor 18 in Verbindung. Weiterhin steht die elektronische Steuereinrichtung 42 mit einer nicht näher dargestellten, die Drehzahl des Verbrennungsmotors 3 erfassenden Drehzahlsensoreinrichtung in Verbindung. Die Steuereinrichtung 42 kann weiterhin mit Bedienelementen der Arbeitsmaschine in Verbindung stehen, um bei deren Betätigung einen Startwunsch des abgestellten Verbrennungsmotors 3 zu ermitteln und den Startvorgang des abgestellten Verbrennungsmotors 3 auszulösen. Die Steuereinrichtung 41 kann hierzu beispielsweise mit einem Sensor in Verbindung stehen, der die Betätigung eines Fahrpedals ermittelt, und/oder mit einer Joystickeinrichtung in Verbindung stehen, durch deren Betätigung die Verbraucher der Arbeitshydraulik 5 angesteuert werden, und/oder mit einem Lenkwinkelsensor in Verbindung stehen, der der Betätigung eines Lenkrades der Lenkungseinrichtung 13 erfasst. Die Steuereinrichtung 41 kann zudem das Ladeventil 32 und die Ladeventileinrichtung 33 für den Ladebetrieb des Druckmittelspeichers 30 ansteuern.

Die Steuereinrichtung 41 steuert anhand der Eingangssignale des Drucksensors 36, der Drehzahl des Verbrennungsmotors 3 sowie der Signale der Bedienelemente (Joystickeinrichtung, Sensor am Fahrpedal bzw. Lenkwinkelsensor) den Ablauf der Start-Stopp-Funktion.

Der Drucksensor in der Lastdruckleitung 17 der Lenkungseinrichtung 13 kann ebenfalls als Indikator für einen Startvorgang des abgestellten Verbrennungsmotors 3 genutzt werden. Wird von einer Bedienperson der Arbeitsmaschine bei abgestelltem Verbrennungsmotor 3 das Lenkrad der Lenkungseinrichtung 13 betätigt, erfolgt ein Druckaufbau in der Lastdruckleitung 17, der von der Steuereinrichtung 41 ermittelt werden kann, um den Startvorgang zum Starten des abgestellten Verbrennungsmotors 3 auszulösen.

Das Steuerventil 40 ist in einer Verbindungsleitung 45 angeordnet, die von dem Druckmittelspeicher 30 zu der zur Saugseite S der Arbeitshydraulikpumpe 2 geführten Ansaugleitung 10 geführt ist. Die mit der Ladeventileinrichtung 33 versehene Verbindungsleitung 31 ist hierbei zwischen dem Steuerventil 40 und dem Druckmittelspeicher 30 an die Verbindungsleitung 45 angeschlossen.

In der Ansaugleitung 10 der Arbeitshydraulikpumpe 2 ist ein in Richtung zum Behälter 9 sperrendes Sperrventil 50 angeordnet, das bevorzugt als ein in Richtung zum Behälter sperrendes Rückschlagventil 51 ausgebildet ist. Das Sperrventil 50 verhindert im Motorbetrieb der Arbeitshydraulikpumpe 2 ein Abströmen des von dem Druckmittelspeicher 30 zur Saugseite S der Arbeitshydraulikpumpe 2 strömenden Druckmittels in den Behälter 9 und ermöglicht einen Druckaufbau an der Saugseite S der Arbeitshydraulikpumpe 2 für den Motorbetrieb.

Die als Verstellpumpe mit stufenlos veränderbarem Verdrängungsvolumen ausgebildete Arbeitshydraulikpumpe 2 weist zur Einstellung des Verdrängungsvolumens eine Verdrängervolumenstelleinrichtung 60 auf, beispielsweise eine in der Neigung verstellbare Schrägscheibe einer Axialkolbenmaschine in Schrägscheibenbauweise. Die Verdrängervolumenstelleinrichtung 60 umfasst zur Betätigung eine mit der Verdrängervolumenstelleinrichtung 60 in Wirkverbindung stehende Verstelleinrichtung 24, die eine mit der Verdrängervolumenstelleinrichtung 60 in Wirkverbindung stehende Stellkolbeneinrichtung 61 umfasst.

Die erfindungsgemäße Arbeitshydraulikpumpe 2 ist als einseitig verstellbares Triebwerk ausgebildet, bei dem die Verdrängervolumenstelleinrichtung 60 ausgehend von einer Stellung mit minimalem Verdrängervolumen in eine Stellrichtung bzw. Schwenkrichtung auf eine Stellung mit maximalem Verdrängervolumen verstellbar ist. Die Stellkolbeneinrichtung 61 weist einen in Richtung des maximalen Verdrängervolumens wirkenden Stelldruckraum 61a und einen in Richtung des minimalen Verdrängervolumens wirkenden Stelldruckraum 61b auf.

Die Verdrängervolumenstelleinrichtung 60 ist mittels einer Stellventileinrichtung 62 betätigbar, die ebenfalls Bestandteil der Verstelleinrichtung 24 ist. Die Stellventileinrichtung 62 weist ein nicht näher dargestelltes Stellventil auf, mit dem die Beaufschlagung der Stelldruckräume 61a, 61b der Stellkolbeneinrichtung 61 mit einem Stelldruck bzw. deren Entlastung zu dem Behälter 9 steuerbar ist.

Die Stellventileinrichtung 62 ist zur Versorgung mit Druckmittel und zur Erzeugung eines Stelldruckes in den Stelldruckräumen 61a bzw. 61b der Stellkolbeneinrichtung 61 über eine Stelldruckleitung 63 mit der Speisedruckleitung 22 und somit dem Speisedruckkreis 23 verbunden. Weiterhin weist die Stellventileinrichtung 62 einen Anschluss an eine zu dem Behälter 9 geführte Behälterleitung 64 auf.

Weiterhin ist eine als Druckfeder ausgebildete Federeinrichtung 66 vorgesehen, die die Verdrängervolumenstelleinrichtung 60 in Richtung des minimalen Verdrängervolumens beaufschlagt, der durch einen entsprechenden nicht näher dargestellten Endanschlag der Verdrängervolumenstelleinrichtung 60 begrenzt werden kann.

Um die Verdrängervolumenstelleinrichtung 60 bei einem Startvorgang der Start-Stopp-Funktion des abgestellten Verbrennungsmotors 3 durch den Motorbetrieb der Arbeitshydraulikpumpe 2 in Richtung der Stellung mit maximalem Verdrängervolumen zu beaufschlagen, ist in dem dargestellten Ausführungsbeispiel eine Zusatzstellkolbeneinrichtung 80 vorgesehen. Die Zusatzstellkolbeneinrichtung 80 steht ebenfalls mit der Verdrängervolumenstelleinrichtung 60 zum Verstellen des Verdrängervolumens der Arbeitshydraulikpumpe 2 in Wirkverbindung und ist unmittelbar von dem in dem Druckmittelspeicher 30 anstehenden Druck beaufschlagbar. Die Zusatzstellkolbeneinrichtung 80 ist als einfachwirkender Stellkolben ausgebildet und weist einen in Richtung des maximalen Verdrängervolumens wirkenden Stelldruckraum auf, der mittels einer Druckmittelleitung 82 mit der Ansaugleitung 10 zwischen der Ansaugseite S und dem Sperrventil 50 und somit mit der Verbindungsleitung 45 verbunden ist.

Die Arbeitshydraulik 5 umfasst einen Tankentlastungspfad 100, der eine Verbindung der Förderleitung 11 der Arbeitshydraulik 5 mit dem Behälter 9 ermöglicht. Der Tankentlastungspfad 100 ist von einer Umlaufdruckwaage 101 gebildet. Die Umlaufdruckwaage 101 ist der Förderleitung 11 der Arbeitshydraulik 5 zugeordnet. Die Umlaufdruckwaage 101 steht eingangsseitig mit der Förderleitung 11 der Arbeitshydraulik 5 und ausgangsseitig mit dem Behälter 9 in Verbindung. Die Umlaufdruckwaage 101 ist hierzu in einer Umlaufleitung 105 angeordnet, die von der Förderleitung 11 der Arbeitshydraulik 5 zu dem Behälter 9 geführt ist. Die Umlaufdruckwaage 101 ist von einer Feder 102 und dem in einer Lastdruckleitung 103 anstehenden höchsten Lastdruck der angesteuerten Verbraucher der Arbeitshydraulik 5 in eine Sperrstellung 101a betätigt und von dem in der Förderleitung 11 der Arbeitshydraulik 5 anstehenden Druck in eine Durchflussstellung 101b betätigt. Hierzu ist an eine in Richtung der Durchflussstellung 101b wirkende Steuerfläche der Umlaufdruckwaage 101 eine mit der Förderleitung 11 der Arbeitshydraulik 5 in Verbindung stehende Steuerleitung 106 angeschlossen. Die Umlaufdruckwaage 101 ist im dargestellten Ausführungsbeispiel stromab des Ladeventils 32 an die Förderleitung 11 der Arbeitshydraulik 5 angeschlossen.

Erfindungsgemäß ist ein Bypassventil 110 vorgesehen, mit dem im Motorbetrieb der Arbeitshydraulikpumpe 2 zum Starten des abgestellten Verbrennungsmotors 3 der von der im Motorbetrieb betriebenen Arbeitshydraulikpumpe 2 an der Förderseite P gelieferte Volumenstrom direkt zu dem Behälter 9 abführbar ist.

Das Bypassventil 110 ist im Motorbetrieb der Arbeitshydraulikpumpe 2 zum Starten des abgestellten Verbrennungsmotors 2 zu Beginn des Startvorgangs in eine die Förderseite P der Arbeitshydraulikpumpe 2 mit dem Behälter 9 verbindende Öffnungsstellung beaufschlagt. Das Bypassventil 110 wird beim Startvorgang des Verbrennungsmotors 3 in eine die Förderseite P der Arbeitshydraulikpumpe 2 mit dem Behälter 9 absperrende Sperrstellung beaufschlagt, bevor die Leerlaufdrehzahl des Verbrennungsmotors 3 erreicht wird.

In den in den Figuren 1 und 2 dargestellten Ausführungsbeispielen ist das Bypassventil 110 als ein in Durchflussrichtung zu dem Behälter 9 schließendes Rückschlagventil 115 ausgebildet. Das Rückschlagventil 115 weist einen Ventilkörper 116, der von einer Feder 117 in eine die Förderseite P der Arbeitshydraulikpumpe 2 mit dem Behälter 9 verbindende Öffnungsstellung beaufschlagt ist. Der Ventilkörper 116 ist von der dem Rückschlagventil 115 zuströmenden Druckmittelmenge in Richtung einer die Förderseite P der Arbeitshydraulikpumpe 2 mit dem Behälter 9 absperrenden Sperrstellung beaufschlagt.

Das Rückschlagventil 115 wird somit mittels der eingestellten und vorgegebenen Federkraft der Feder 117 für eine vorbestimmte Druckmittelmenge in der offenen Durchflussstellung gehalten. Übersteigt die von der Arbeitshydraulikpumpe 2 an der Förderseite P gelieferte Druckmittelmenge diesen von der Feder 117 eingestellten Schwellwert, wird der Ventilkörper 116 des Rückschlagventils 115 von der geförderten Druckmittelmenge in die Sperrstellung betätigt.

Das Rückschlagventil 115 ist hierbei derart ausgelegt, dass der Ventilkörper 116 beim Startvorgang des Verbrennungsmotors 3 in die Sperrstellung betätigt wird, bevor die von der im Motorbetrieb betriebenen Arbeitshydraulikpumpe 2 an der Förderseite P gelieferte Fördermenge bei minimalem Verdrängungsvolumen der Arbeitshydraulikpumpe 2 und der Leerlaufdrehzahl des Verbrennungsmotors 3 erreicht wird.

Zum Starten des abgestellten Verbrennungsmotors 3 wird das Steuerventil 40 in die Durchflussstellung 40b betätigt, so dass die Arbeitshydraulikpumpe 2 über die Verbindungsleitung 45 an der Saugseite S von Druckmittel aus dem Druckmittelspeicher 30 angetrieben wird und als Motor arbeitet. Die Förderseite P der Arbeitshydraulikpumpe 2 ist zu Beginn des Startvorgangs des Verbrennungsmotors 3 über das geöffnete Bypassventil 110 zu dem Behälter 9 entlastet, so dass im Motorbetrieb der Arbeitshydraulikpumpe 2 die an der Förderseite P der Arbeitshydraulikpumpe 2 gelieferte Druckmittelmenge direkt und unter Umgehung des Tankentlastungspfades 100 der Arbeitshydraulik 5 zu dem Behälter 9 abgeführt wird. Wird beim Startvorgang der von der Feder 117 definierte Schwellwert für den Druckmittelstrom erreicht, schließt das Bypassventil 110 und der Tankentlastungspfad 100 übernimmt die von der Arbeitshydraulikpumpe 2 gelieferte Druckmittelmenge, um diese bei geöffneter Umlaufdruckwaage 101 zum Behälter 9 abzuführen.

Durch die direkte Verbindung der Förderseite P der Arbeitshydraulikpumpe 2 mit dem Behälter 9 über das Bypassventil 110 wird erzielt, dass zu Beginn des Startvorgangs des abgestellten Verbrennungsmotors 3 durch den Motorbetrieb der Arbeitshydraulikpumpe 3 die Umlaufdruckwaage 101 des Tankentlastungspfades 100 der Arbeitshydraulik 5 und die gegebenenfalls stromauf der Umlaufdruckwaage 101 angeordneten Ventile (Ladeventil 32 und gegebenenfalls Prioritätsventil 12) nicht von dem an der Förderseite P der Arbeitshydraulikpumpe 2 gelieferten Druckmittelstrom in die Öffnungsstellung bzw. Durchflussstellung betätigt werden müssen, so dass der dem Drehmomentaufbau an der im Motorbetrieb betriebenen Arbeitshydraulikpumpe 2 entgegenstehende Druck an der Förderseite P der Arbeitshydraulikpumpe 2 reduziert wird und die Arbeitshydraulikpumpe 2 im Motorbetrieb ein hohes Drehmoment zum Starten des Verbrennungsmotors 3 bereitstellt.

In dem Ausführungsbeispiel der Figur 1 ist das Bypassventil 110 der Förderseite P der Arbeitshydraulikpumpe 2 stromauf des Prioritätsventils 12 zugeordnet und eine zu dem Behälter 9 geführte Bypassleitung 120, in der das Bypassventil 110 angeordnet ist, an die Verbindungsleitung 14 angeschlossen.

In dem Ausführungsbeispiel der Figur 2 ist das Bypassventil 110 der Förderseite P der Arbeitshydraulikpumpe 2 stromab des Prioritätsventils 12 zugeordnet und die zu dem Behälter 9 geführte Bypassleitung 120, in der das Bypassventil 110 angeordnet ist, an die Förderleitung 11 der Arbeitshydraulik 5 angeschlossen. Die Bypassleitung 120 ist hierbei stromauf des Anschlusses der Umlaufdruckwaage 101 und stromauf des Ladeventils 32 an die Förderleitung 11 der Arbeitshydraulik 5 angeschlossen.

## Patentansprüche

1. Hydrostatisches Antriebssystem (1) einer mobilen Arbeitsmaschine mit einer Arbeitshydraulik (5) und einer von einem Verbrennungsmotor (3) angetriebenen Arbeitshydraulikpumpe (2), die in einem Pumpenbetrieb mit einer Saugseite (S) Druckmittel aus einem Behälter (9) ansaugt und mit einer Förderseite (P) in eine zu der Arbeitshydraulik (5) geführte Förderleitung (11) fördert, wobei eine hydraulische Start-Stopp-Funktion zum Starten des abgestellten Verbrennungsmotors (3) vorgesehen ist, in der die Arbeitshydraulikpumpe (2) in einem Motorbetrieb betreibbar ist, wobei im Motorbetrieb die Arbeitshydraulikpumpe (2) von Druckmittel angetrieben ist, das von einem Druckmittelspeicher (30) an die Saugseite (S) der Arbeitshydraulikpumpe (2) zugeführt wird, wobei ein Bypassventil (110) vorgesehen ist, mit dem im Motorbetrieb der Arbeitshydraulikpumpe (2) zum Starten des abgestellten Verbrennungsmotors (3) der von der im Motorbetrieb betriebenen Arbeitshydraulikpumpe (2) an der Förderseite (P) gelieferte Volumenstrom zu dem Behälter (9) abführbar ist, wobei das Bypassventil (110) im Motorbetrieb zum Starten des abgestellten Verbrennungsmotors (3) in eine die Förderseite (P) der Arbeitshydraulikpumpe (2) mit dem Behälter (9) verbindende Öffnungsstellung beaufschlagt ist, **dadurch gekennzeichnet, dass** der zu der Arbeitshydraulik (5) geführten Förderleitung (11) eine Umlaufdruckwaage (101) zugeordnet ist, wobei das Bypassventil (110) der Förderleitung (11) stromauf der Umlaufdruckwaage (101) zugeordnet ist.

2. Hydrostatisches Antriebssystem nach Anspruch 1, **dadurch gekennzeichnet, dass** das Bypassventil (110) beim Startvorgang des Verbrennungsmotors (3) in eine die Förderseite (P) der Arbeitshydraulikpumpe (2) mit dem Behälter (9) absperrende Sperrstellung beaufschlagt ist, bevor die Leerlaufdrehzahl des Verbrennungsmotors (3) erreicht wird.

3. Hydrostatisches Antriebssystem nach Anspruch 1 oder 2, **dadurch gekennzeichnet, dass** in der Förderleitung (11) der Arbeitshydraulikpumpe (2) ein Prioritätsventil (12) zur bevorzugten Versorgung eines Verbrauchers (13), insbesondere einer Lenkungshydraulik, angeordnet ist, das eingangsseitig mittels einer Verbindungsleitung (14) mit der Förderseite (P) der Arbeitshydraulikpumpe (2) und ausgangsseitig mit der zu der Arbeitshydraulik (5) geführten Förderleitung (11) und einer zu dem bevorzugten Verbraucher (13) geführten Förderleitung (15) verbunden ist, wobei das Bypassventil (110) der Verbindungsleitung (14) zugeordnet ist.

4. Hydrostatisches Antriebssystem nach Anspruch 1 oder 2, **dadurch gekennzeichnet, dass** in der Förderleitung (11) der Arbeitshydraulikpumpe (2) ein Prioritätsventil (12) zur bevorzugten Versorgung eines Verbrauchers (13), insbesondere einer Lenkungshydraulik, angeordnet ist, das eingangsseitig mittels einer Verbindungsleitung (14) mit der Förderseite (P) der Arbeitshydraulikpumpe (2) und ausgangsseitig mit der zu der Arbeitshydraulik (5) geführten Förderleitung (11) und einer zu dem bevorzugten Verbraucher (13) geführten Förderleitung (15) verbunden ist, wobei das Bypassventil (101) der zu der Arbeitshydraulik (5) geführten Förderleitung (11) zugeordnet ist.

5. Hydrostatisches Antriebssystem nach einem der Ansprüche 1 bis 4, **dadurch gekennzeichnet, dass** in der zu der Arbeitshydraulik (5) geführten Förderleitung (11) ein Ladeventil (32) zum Laden des Druckmittelspeichers (30) angeordnet ist, wobei das Bypassventil (110) der Förderleitung (11) stromauf des Ladeventils (32) zugeordnet ist.

6. Hydrostatisches Antriebssystem nach einem der Ansprüche 1 bis 5, **dadurch gekennzeichnet, dass** das Bypassventil (110) als Schaltventil ausgebildet ist.

7. Hydrostatisches Antriebssystem nach Anspruch 6, **dadurch gekennzeichnet, dass** das Schaltventil elektrisch betätigbar ist und zur Ansteuerung mit einer elektronischen Steuereinrichtung in Wirkverbindung steht.

8. Hydrostatisches Antriebssystem nach einem der Ansprüche 1 bis 5, **dadurch gekennzeichnet, dass** das Bypassventil (110) als ein in Durchflussrichtung zu dem Behälter (9) schließendes Rückschlagventil (115) ausgebildet ist, das von einer Feder (117) in die die Förderseite (P) der Arbeitshydraulikpumpe (2) mit dem Behälter (9) verbindende Öffnungsstellung beaufschlagt ist.

9. Hydrostatisches Antriebssystem nach Anspruch 8, **dadurch gekennzeichnet, dass** das Rückschlagventil (115) einen Ventilkörper (116) aufweist, der von der dem Rückschlagventil (115) zuströmenden Druckmittelmenge in Richtung einer die Förderseite (P) der Arbeitshydraulikpumpe (2) mit dem Behälter (9) absperrenden Sperrstellung beaufschlagt ist.

10. Hydrostatisches Antriebssystem nach Anspruch 8 oder 9, **dadurch gekennzeichnet, dass** das Rückschlagventil (115) derart ausgelegt ist, dass der Ventilkörper (116) beim Startvorgang des Verbrennungsmotors (3) in die Sperrstellung betätigt wird, bevor die von der im Motorbetrieb betriebenen Arbeitshydraulikpumpe (2) an der Förderseite (P) gelieferte Fördermenge bei einem gegebenen Verdrängungsvolumen der Arbeitshydraulikpumpe (2) und der Leerlaufdrehzahl des Verbrennungsmotors (3) erreicht wird.

11. Hydrostatisches Antriebssystem nach Anspruch 10, **dadurch gekennzeichnet, dass** die Arbeitshydraulikpumpe (2) als Verstellpumpe mit einem veränderbaren Verdrängungsvolumen ausgebildet ist, wobei das gegebene Verdrängungsvolumen dem minimalen Verdrängungsvolumen entspricht.

## Claims

1. Hydrostatic drive system (1) of a mobile work machine, having a working hydraulics system (5) and a working hydraulics system pump (2) which is driven by an internal combustion engine (3) and in a pumping operation by way of a suction side (S) suctions pressurizing medium from a vessel (9) and by way of a conveying side (P) conveys said pressurizing medium into a conveying line (11) routed to the working hydraulics system (5), wherein a hydraulic start/stop function for starting the switched-off internal combustion engine (3) is provided, in which start/stop function the working hydraulics system pump (2) is able to be operated in an engine operation, wherein the working hydraulics system pump (2) in the engine operation is driven by pressurizing medium which from a pressurizing medium reservoir (30) is fed to the suction side (S) of the working hydraulics system pump (2), wherein a bypass valve (110) is provided, by way of which bypass valve (110) in the engine operation of the working hydraulics system pump (2), for starting the switched-off internal combustion engine (3), the volumetric flow that is delivered to the conveying side (P) by the working hydraulics system pump (2) operated in the engine operation is able to be discharged to the vessel (9), wherein the bypass valve (110) in the engine operation, for starting the switched-off internal combustion engine (3), is impinged to an opening position that connects the conveying side (P) of the working hydraulics system pump (2) to the vessel (9), **characterized in that** the conveying line (11) routed to the working hydraulics system (5) is assigned a circulation pressure compensator (101), wherein the bypass valve (110) is assigned to the conveying line (11) so as to be upstream of the circulation pressure compensator (101).

2. Hydrostatic drive system according to Claim 1, **characterized in that**, before the idling rotating speed of the internal combustion engine (3) is reached, the bypass valve (110) in the starting procedure of the internal combustion engine (3) is impinged to a blocking position that blocks the conveying side (P) of the working hydraulics system pump (2) in relation to the vessel (9).

3. Hydrostatic drive system according to Claim 1 or 2, **characterized in that** a priority valve (11) for the preferential supply of a consumer (13), in particular a steering hydraulics system, is disposed in the conveying line (11) of the working hydraulics system pump (2), said priority valve (12) at the entry side by means of a connection line (14) being connected to the conveying side (P) of the working hydraulics system pump (2) and at the exit side being connected to the conveying line (11) routed to the working hydraulics system (5) and to a conveying line (15) routed to the preferred consumer (13), wherein the bypass valve (110) is assigned to the connection line (14).

4. Hydrostatic drive system according to Claim 1 or 2, **characterized in that** a priority valve (12) for the preferential supply of a consumer (13), in particular a steering hydraulics system, is disposed in the conveying line (11) of the working hydraulics system pump (2), said priority valve (12) at the entry side by means of a connection line (14) being connected to the conveying side (P) of the working hydraulics system pump (2) and at the exit side being connected to the conveying line (11) routed to the working hydraulics system (5) and to a conveying line (15) routed to the preferred consumer (13), wherein the bypass valve (101) is assigned to the conveying line (11) routed to the working hydraulics system (5).

5. Hydrostatic drive system according to one of Claims 1 to 4, **characterized in that** a charging valve (32) for charging the pressurizing medium reservoir (30) is disposed in the conveying line (11) routed to the working hydraulics system (5), wherein the bypass valve (110) is assigned to the conveying line (11) so as to be upstream of the charging valve (32).

6. Hydrostatic drive system according to one of Claims 1 to 5, **characterized in that** the bypass valve (110) is configured as a switchover valve.

7. Hydrostatic drive system according to Claim 6, **characterized in that** the switchover valve is electrically activatable and for actuation is operatively connected to an electronic control installation.

8. Hydrostatic drive system according to one of Claims 1 to 5, **characterized in that** the bypass valve (110) is configured as a check valve (115) which closes in the flow direction towards the vessel (9) and which by a spring (117) is impinged to the opening position that connects the conveying side (P) of the working hydraulics system pump (2) to the vessel (9) .

9. Hydrostatic drive system according to Claim 8, **characterized in that** the check valve (115) has a valve body (116) which by the quantity of pressurizing medium that flows into the check valve (115) is impinged in the direction of a blocking position that blocks the conveying side (P) of the working hydraulics system pump (2) in relation to the vessel (9).

10. Hydrostatic drive system according to Claim 8 and 9, **characterized in that** the check valve (115) is conceived in such a manner that the valve body (116) in the starting procedure of the internal combustion engine (3) is activated to the blocking position before the conveyed amount which by the working hydraulics system pump (2) in the engine operation is delivered at the conveying side (P) at a given displacement volume of the working hydraulics system pump (2) and at the idling rotating speed of the internal combustion engine (3) is reached.

11. Hydrostatic drive system according to Claim 10, **characterized in that** the working hydraulics system pump (2) is configured as variable pump having a variable displacement, wherein the given displacement corresponds to the minimum displacement.

## Revendications

1. Système d'entraînement hydrostatique (1) d'une machine de travail mobile muni d'un organe hydraulique de travail (5) et d'une pompe hydraulique de travail (2) entraînée par un moteur à combustion (3) qui, dans un mode d'exploitation de pompe, aspire un fluide sous pression d'un contenant (9) avec un côté d'aspiration (S) et le refoule avec un côté de refoulement (P) dans une conduite de refoulement (11) acheminée jusqu'à l'organe hydraulique de travail (5), une fonction marche-arrêt hydraulique étant prévue pour le démarrage du moteur à combustion arrêté (3), dans laquelle la pompe hydraulique de travail (2) peut être exploitée dans un mode d'exploitation de moteur ; dans le mode d'exploitation de moteur, la pompe hydraulique de travail (2) étant entraînée par du fluide sous pression, qui est amené depuis un réservoir de fluide sous pression (30) au côté d'aspiration (S) de la pompe hydraulique de travail (2), une soupape de dérivation (110) étant prévue, avec laquelle, dans le mode d'exploitation de moteur de la pompe hydraulique de travail (2), pour le démarrage du moteur à combustion arrêté (3), le courant volumique délivré du côté de refoulement (P) par la pompe hydraulique de travail (2) exploitée dans le mode d'exploitation de moteur peut être déchargé vers le contenant (9), la soupape de dérivation (110) dans le mode d'exploitation de moteur pour le démarrage du moteur à combustion arrêté (3) pouvant être sollicitée dans une position d'ouverture raccordant le côté de refoulement (P) de la pompe hydraulique de travail (2) au réservoir (9), **caractérisé en ce qu'**un compensateur de pression à circulation (101) est associé à la conduite de refoulement (11) acheminée jusqu'à l'organe hydraulique de travail (5), la conduite de dérivation (110) étant associée à la conduite de refoulement (11) en amont du compensateur de pression à circulation (101).

2. Système d'entraînement hydrostatique selon la revendication 1, **caractérisé en ce que**, lors du processus de démarrage du moteur à combustion (3), la soupape de dérivation (110) est sollicitée dans une position de coupure coupant le côté de refoulement (P) de la pompe hydraulique de travail (2) du contenant (9), avant que la vitesse de rotation à vide du moteur à combustion (3) soit atteinte.

3. Système d'entraînement hydrostatique selon la revendication 1 ou 2, **caractérisé en ce qu'**une soupape de priorité (12) pour l'alimentation préférentielle d'un consommateur (13), notamment d'un organe hydraulique de direction, est agencée dans la conduite de refoulement (11) de la pompe hydraulique de travail (2), qui est raccordée côté entrée au moyen d'une conduite de raccordement (14) avec le côté de refoulement (P) de la pompe hydraulique de travail (2) et côté sortie avec la conduite de refoulement (11) acheminée jusqu'à l'organe hydraulique de travail (5) et une conduite de refoulement (15) acheminée jusqu'au consommateur préférentiel (13), la soupape de dérivation (110) étant associée à la conduite de raccordement (14).

4. Système d'entraînement hydrostatique selon la revendication 1 ou 2, **caractérisé en ce qu'**une soupape de priorité (12) pour l'alimentation préférentielle d'un consommateur (13), notamment d'un organe hydraulique de direction, est agencée dans la conduite de refoulement (11) de la pompe hydraulique de travail (2), qui est raccordée côté entrée au moyen d'une conduite de raccordement (14) avec le côté de refoulement (P) de la pompe hydraulique de travail (2) et côté sortie avec la conduite de refoulement (11) acheminée jusqu'à l'organe hydraulique de travail (5) et une conduite de refoulement (15) acheminée jusqu'au consommateur préférentiel (13), la soupape de dérivation (101) étant associée à la conduite de refoulement (11) acheminée jusqu'à l'organe hydraulique de travail (5).

5. Système d'entraînement hydrostatique selon l'une quelconque des revendications 1 à 4, **caractérisé en ce qu'**une soupape de chargement (32) pour le chargement du réservoir de fluide sous pression (30) est agencée dans la conduite de refoulement (11) acheminée jusqu'à l'organe hydraulique de travail (5), la soupape de dérivation (110) étant associée à la conduite de refoulement (11) en amont de la soupape de chargement (32).

6. Système d'entraînement hydrostatique selon l'une quelconque des revendications 1 à 5, **caractérisé en ce que** la soupape de dérivation (110) est configurée sous la forme d'une soupape de commutation.

7. Système d'entraînement hydrostatique selon la revendication 6, **caractérisé en ce que** la soupape de commutation est actionnable électriquement et est en liaison fonctionnelle avec un appareil de commande électronique pour la commande.

8. Système d'entraînement hydrostatique selon l'une quelconque des revendications 1 à 5, **caractérisé en ce que** la soupape de dérivation (110) est configurée sous la forme d'un clapet anti-retour (115) se fermant dans la direction de l'écoulement vers le contenant (9), qui est sollicité par un ressort (117) dans la position d'ouverture raccordant le côté de refoulement (P) de la pompe hydraulique de travail (2) au contenant (9).

9. Système d'entraînement hydrostatique selon la revendication 8, **caractérisé en ce que** le clapet anti-retour (115) comprend un corps de clapet (116), qui est sollicité par la quantité de fluide sous pression arrivant au clapet anti-retour (115) en direction d'une position de coupure coupant le côté de refoulement (P) de la pompe hydraulique de travail (2) du contenant (9) .

10. Système d'entraînement hydrostatique selon la revendication 8 ou 9, **caractérisé en ce que** le clapet anti-retour (115) est conçu de telle sorte que le corps de clapet (116) est actionné dans la position de coupure lors du processus de démarrage du moteur à combustion (3), avant que la quantité refoulée délivrée au côté de refoulement (P) par la pompe hydraulique de travail (2) exploitée dans le mode d'exploitation de moteur soit atteinte à un volume de déplacement donné de la pompe hydraulique de travail (2) et à la vitesse de rotation à vide du moteur à combustion (3).

11. Système d'entraînement hydrostatique selon la revendication 10, **caractérisé en ce que** la pompe hydraulique de travail (2) est configurée en tant que pompe de réglage ayant un volume de déplacement modifiable, le volume de déplacement donné correspondant au volume de déplacement minimal.
